# EUROPEAN PATENT APPLICATION

(11) **EP 2 413 596 A1**
(43) Date of publication of application: **01.02.2012**
(21) Application number: 11168701.8
(22) Date of filing: 03.06.2011
(51) Int. Cl.: H04N 5/783, H04N 5/913, G11B 27/00, H04N 7/24

(54) **Picture processing apparatus and control method of the same**

(30) Priority: 29.07.2010 KR 20100073544
(71) Applicant: SAMSUNG ELECTRONICS CO., LTD., Suwon-si Gyeonggi-do 442-742 (KR)
(72) Inventor: Chung, Ji-min, Gyeonggi-do (KR); Kim, Je-ik, Gyeonggi-do (KR)
(74) Representative: Robinson, Ian Michael

(57) **Abstract**

A picture processing apparatus and a control method of the same are provided. The picture processing apparatus includes a receiver which receives scrambled transport streams constituting different kinds of pictures; a storage unit; a demultiplexer which seizes payload unit start identification (PUSI) contained in a header of the transport stream, and outputs packetized elementary stream (PES) start information and PES interval information about an interval between a first transport stream having a PUSI equal to 1 and a second transport stream having a PUSI equal to 1; and a controller which stores the received transport streams in the storage unit, determines the kind of pictures on the basis of a picture size determined from the PES interval information, and indexes a location where the pictures are stored on the basis of the PES start information.

## Description

### BACKGROUND

### Field

Apparatuses and methods consistent with the exemplary embodiments relate to a picture processing apparatus and a control method of the same, and more particularly, to a picture processing apparatus having a personal video recorder (PVR) function of storing and reproducing a video signal, and a control method of the same.

### Description of the Related Art

A personal video recorder (PVR) is a video recording device for storing a video signal in a hard disk drive or the like provided in the apparatus and reproducing it. As opposed to a video cassette recorder (VCR), the PVR is a digital recording device that stores a video signal in the hard disk drive and reproduces it.

When a channel is selected, the PVR automatically or manually stores a currently broadcasting video signal as a digital signal in the hard disk drive. Such a PVR provides various additional functions as well as a basic recording function. Among the various additional functions, there are a fast forward function for reproducing and searching the stored video signal at high speed, and a rewind function for reversely reproducing it at high speed, etc.

Meanwhile, a broadcasting signal is compressed by a moving picture experts group (MPEG) standard using a relationship between pictures. To perform the fast forward or rewind function, a picture processing apparatus has to store picture information of a video signal ascertained by a decoder or parser, i.e., index information about an intra coded picture (I picture) or reference picture in addition to the video signal.

However, in the case of receiving a scrambled video signal allowed to only a specific viewer, it is impossible to ascertain the picture information because of the scramble of the video signal. Thus, there is a problem that a picture searching function is not applicable to a scrambled video signal.

### SUMMARY

According to the present invention there is provided an apparatus and method as set forth in the appended claims. Other features of the invention will be apparent from the dependent claims, and the description which follows. One or more exemplary embodiments provide a picture processing apparatus and a control method of the same, in which picture indexing of a scrambled transport stream is possible.

Another exemplary embodiment provides a picture processing apparatus and a control method of the same, which can perform a picture searching function even through a transport stream is scrambled.

The foregoing and/or other aspects may be achieved by providing a picture processing apparatus including a receiver which receives scrambled transport streams constituting different kinds of pictures; a storage unit; a demultiplexer which seizes payload unit start identification (PUSI) contained in a header of the transport stream, and outputs packetized elementary stream (PES) start information and PES interval information about an interval between the successive PES start information with respect to the transport stream having the PUSI of 1; and a controller which stores the received transport stream in the storage unit, determines the kind of pictures on the basis of a picture size seized from the PES interval information, and indexes a location where the picture is stored on the basis of the PES start information.

The PES interval information may correspond to the number of transport streams received between the successive PES start information, and the controller may determine that the picture is big as the number of transport streams received between the successive PES start information becomes larger.

The picture processing apparatus may further include a user selector through which a picture searching function for searching a picture is selected; a descrambler which descrambles the scrambled transport stream; and a decoder which processes the descrambled transport stream, wherein the controller controls the descrambler and the decoder to descramble and decode transport streams constituting a picture corresponding to at least one among the indexed pictures if the picture searching function is selected.

The user selector may receive a selecting signal for setting up a picture searching speed, and the controller may select the kind of pictures to be decoded corresponding to the picture searching speed.

The controller may decode an intra coded (I) picture if the picture searching speed is equal to or faster than 4-speed, and decode the I picture and at least one between a bidirectional (B) picture and a predictive (P) picture if the picture searching speed is slower than 4-speed.

The picture processing apparatus may further include a display unit which displays a picture based on the decoded transport stream.

Another aspect may be achieved by providing a method of controlling a picture processing apparatus, the method including receiving scrambled transport streams constituting different kinds of pictures; storing the transport streams; seizing payload unit start identification (PUSI) contained in a header of the transport stream, and seizing packetized elementary stream (PES) start information and PES interval information about an interval between the successive PES start information with respect to the transport stream having the PUSI of 1; determining the kind of pictures on the basis of a picture size seized from the PES interval information; and indexing a location where the picture is stored on the basis of the PES start information.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 is a control block diagram of a picture processing apparatus according to an exemplary embodiment;

FIG. 2 shows information contained in a header of a transport stream (TS) received in the picture processing apparatus according to an exemplary embodiment;

FIG. 3 is a graph showing the kind of pictures corresponding to the number of TSs received in the picture processing apparatus according to an exemplary embodiment;

FIG. 4 shows the kind of pictures and a structure of the TS for explaining picture indexing of a picture processing apparatus according to an exemplary embodiment;

FIG. 5 is a control flowchart for explaining a control method of a picture processing apparatus according to an exemplary embodiment;

FIG. 6 is a control block diagram of a picture processing apparatus according to another exemplary embodiment;

FIG. 7 is a view for explaining a picture used in picture speed searching of a picture processing apparatus according to another exemplary embodiment;

FIG. 8 is a control flowchart for explaining a control method of a picture processing apparatus according to another exemplary embodiment; and

FIG. 9 is a control block diagram of a picture processing apparatus according to another exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

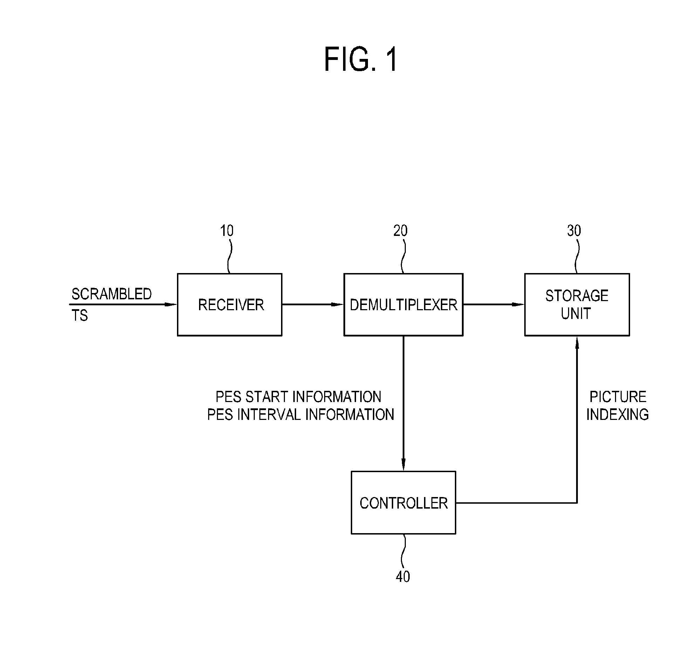

FIG. 1 is a control block diagram of a picture processing apparatus according to an exemplary embodiment. As shown therein, the picture processing apparatus includes a receiver 10, a demultiplexer 20, a storage unit 30, and a controller 40 which controls the receiver 10, the demultiplexer 20, and the storage unit 30. The picture processing apparatus may be achieved by a television displaying a broadcasting signal. In this case, the television may include a personal video recorder (PVR) capable of storing a received broadcasting signal or reproducing the stored broadcasting signal in real time, or include an audio/video (AV) device with the PVR.

The receiver 10 may include an antenna (not shown) to receive a broadcasting signal, and a tuner (not shown) to be tuned to a channel for a broadcasting signal. The broadcasting signal is compressed using a moving picture experts group (MPEG) standard and transmitted, in which a video signal is configured with different kinds of pictures. The tuner (not shown) is tuned to a channel frequency corresponding to a tuning control signal of the controller 40. The tuner may include a demodulator for demodulating the tuned signal, a decoder, a multiplexer (MUX), etc. The broadcasting signal received through the receiver 10 may be airwaves allowed to any viewer, or scrambled contents allowed to only a specific viewer. The scrambled contents are required to be descrambled by a descrambler. Below, it will be described in detail that a scrambled transport stream is stored and reproduced in the case of receiving the scrambled transport stream.

Such a broadcasting signal is time-division multiplexed into video information, audio information and various data, and an elementary stream (ES) corresponding to the information is packetized as a packetized elementary stream (PES). The PES is divided into a plurality of transport streams (TS) and received in the form of a packet. The demodulator applies vestigial sideband (VSB) demodulation, error correction, or the like to the transport stream packet and thus outputs it as a transport stream.

The demultiplexer 20 demultiplexes the descrambled transport stream, ascertains information contained in a header of the transport stream, and outputs the transport stream to the storage unit 30. In this exemplary embodiment, the demultiplexer 20 outputs PES start information and PES interval information about an interval between successive PES start information to the controller 40.

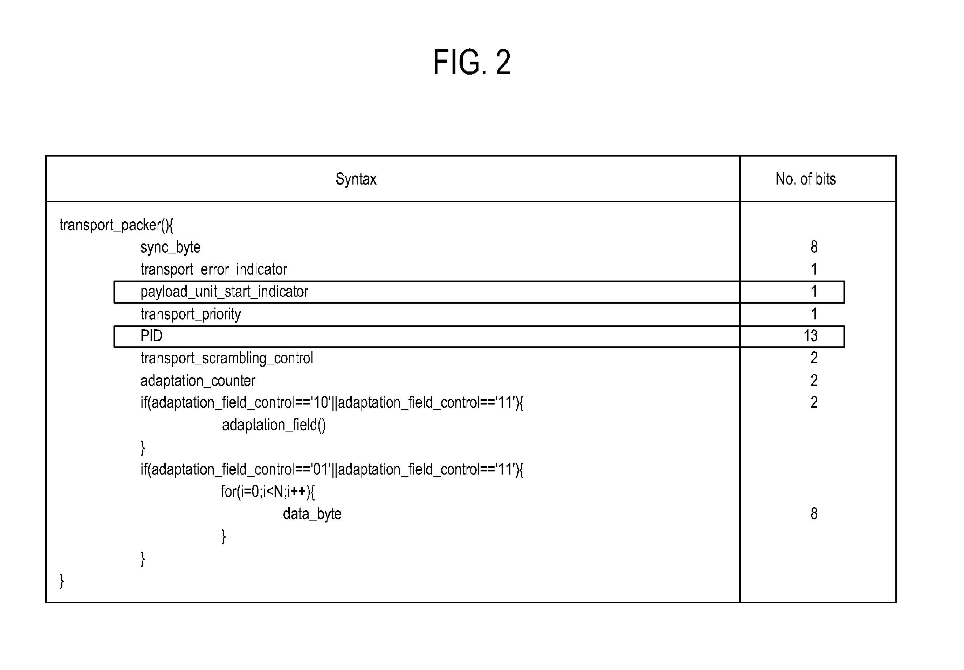

The transport stream is configured with a header and a payload. The payload contains video information, audio information and various data (hereinafter, referred to as 'stream data'), and the header contains information about the stream data contained in the payload, control information, etc. FIG. 2 schematically shows information contained in the header. The header contains information about packet identification (PID) and payload unit start identification (PUSI) of the transport stream, and information about whether the transport stream is scrambled. The PID shows whether the corresponding packet is related to video or audio. The PUSI is information for identifying a start of the PES, in which the PUSI contained in the header of the transport stream that one PES starts is 1. Because the header is not scrambled even though the transport stream is scrambled, information contained in the header is seized by the demultiplexer 20 without passing though the descrambler or the decoder.

In accordance with the exemplary embodiment, the PES start information indicates information about the transport stream where the PUSI is 1. The demultiplexer 20 seizes a packet corresponding to a picture on the basis of the PID, and outputs the PES start information about the transport stream, the PUSI of which is 1, among the packets corresponding to the picture to the controller 40. The PES start information may be information about the location in which the transport stream having the PUSI of 1, is stored, or information about the time at which the transport stream having the PUSI of 1 is received.

Also, the demultiplexer 20 seizes the PES interval information corresponding to an interval between the successive PES start information, and outputs it to the controller 40. The PES interval information is regarded as a value corresponding to the size of the PES. The larger the PES interval information is, the more the data size corresponding to the PES is. In this exemplary embodiment, the demultiplexer 20 counts the number of transport streams received between the successive PES start information, and outputs it as the PES interval information to the controller 40.

The storage unit 30 stores the transport stream received and bypassing the demultiplexer 20, i.e., the transport stream not descrambled or decoded, which can be achieved by a hard disk drive.

In general, the MPEG encoder does not compress all pictures as individual still pictures, but uses the similarity between neighboring pictures to compensate moving. To compensate the moving, picture information for recognizing an intra coded picture (I picture), a bidirectional picture (B picture) and a predict picture (P picture) is stored, and a picture processor (not shown) performs predictive and bidirectional compensation for a picture on the basis of the picture information. The I picture is a picture compressed as a still picture, which can be restored by only its own information. The I picture may be located at any portion of the transport stream, and used for random access of the transport stream. The I picture compressed by the MPEG encoder shows the lowest compression rate. The P picture is a picture for only prediction, which codes only the difference between neighboring pictures. The P picture uses information of a previous I picture and information of a previous P picture at coding and decoding. The B picture represents the difference between the I or P picture before the B picture and the I or P picture after the B picture. The B picture uses all the I and P pictures before and after the B picture at encoding and decoding. The I picture, of which the compression rate is lowest, has more data than the P or B picture, and the P picture has more data than the B picture.

Meanwhile, to use the PVR function for recording a broadcasting signal, a fast forward function for reproducing and searching the stored broadcasting signal at high speed, and a rewind function for reversely reproducing the stored broadcasting signal at high speed, there is needed picture indexing that stores information about the I picture or a reference picture. In the case that the transport stream is scrambled, it is impossible to ascertain the picture information included in the payload. In a result, the picture indexing cannot be performed while storing the transport stream. Therefore, there is a problem that a picture searching function is unavailable in the case of the scrambled transport stream.

To solve such a problem, the controller 40 controls the storage unit 30 to store the received transport stream, determines the kind of picture on the basis of the size of the picture seized from the PES interval information, and indexes a picture location, where the picture is stored, in accordance with the PES start information. The controller 40 may be embodied as, but is not limited to, a software or hardware component, such as a Field Programmable Gate Array (FPGA) or Application Specific Integrated Circuit (ASIC), etc.

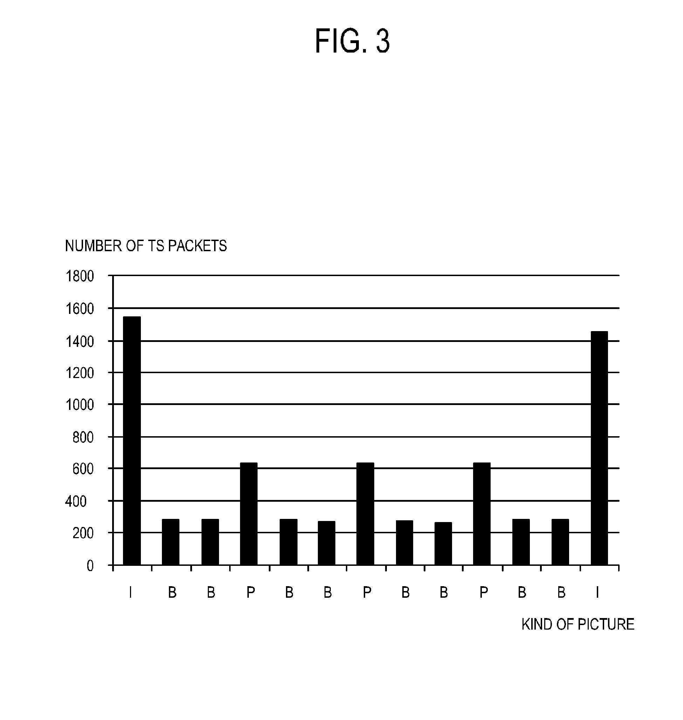

One PES may include a group of pictures (GOP), to which a plurality of pictures are included. However, one PES generally includes one picture. The controller 40 uses such a characteristic to seize what picture is a currently received PES, and indexes the picture location where the picture is stored. FIG. 3 is a graph showing the kind of pictures corresponding to the number of TSs received in the picture processing apparatus. FIG. 3 shows that transport stream packs of a video signal received from British Broadcasting Corporation (BBC) are counted in practice. As shown therein, the number of transport streams constituting the I picture is equal to or more than 1500. However, the number of transport streams constituting the P picture is 600 - 700, and the number of transport streams constituting the B picture is 200 - 300. The controller 40 determines what kind of picture is a corresponding PES on the basis of the PES interval information received from the demultiplexer 20. The controller 40 may use various algorithms for seizing the kind of picture. For example, if the number of transport streams belongs to a first range, it may be determined as the I picture. If the number of transport streams belongs to a second range, it may be determined as the P picture. Likewise, the number of transport streams may be set up with respect to each picture. Alternatively, a pattern about the number of transport streams may be analyzed, and the pictures may be grouped into three kinds of pictures. In this case, a picture that belongs to a group corresponding to the largest number of transport streams may be set up as the I picture, a picture that belongs to a group corresponding to the smallest number of transport streams may be set up as the B picture, and a picture that belongs to the other group may be set up as the P picture. Alternatively, the number of transport streams may be set up with regard to only one picture, e.g., the B picture, and the other pictures may be set up by a relative ratio to the B picture. If the number of transport streams is 8 - 9 times larger than that of the B picture, it may be set up as the I picture. If the number of transport streams is 2 - 3 times larger than that of the B picture, it may be set up as the P picture.

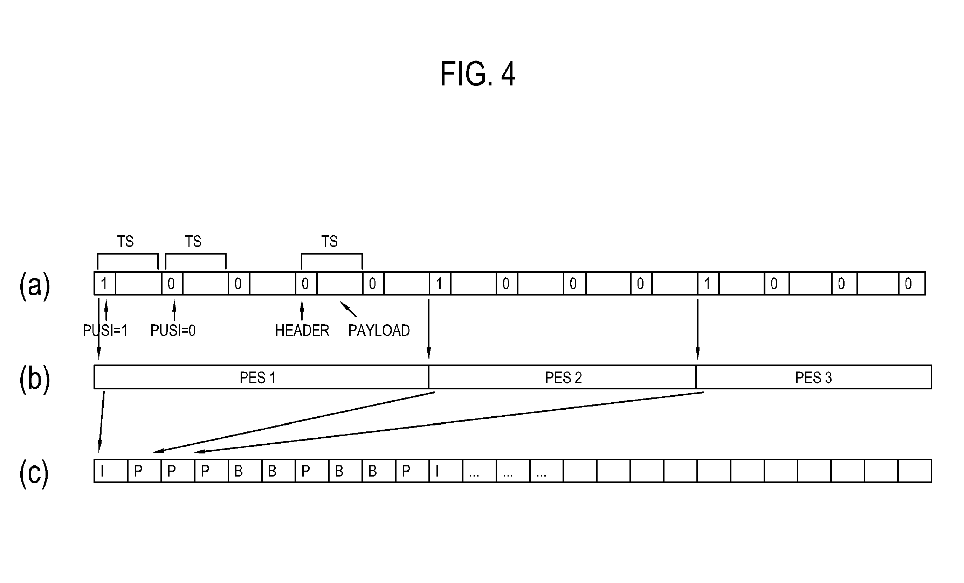

FIG. 4 shows the kind of pictures and a structure of the TS for explaining picture indexing of a picture processing apparatus according to an exemplary embodiment. In, FIG. 4(a) shows that the PUSI is included in the header of the transport stream, and (b) shows that the transport stream having the PUSI of 1 corresponds to the transport stream where the PES starts. Also shown in FIG. 4, (c) shows that the controller 40 determines the picture information on the basis of information about the number of transport streams between the transport steam having the PUSI of 1 and the next transport stream having the PUSI of 1. A first PES was determined as the I picture, and a second PES was determined as the P picture.

The controller 40 indexes the picture location, where the picture is stored, on the basis of the PES start information. For example, the controller 40 may index an absolute location in the storage unit 30 where the first PES is stored, or may index a relative location between the pictures.

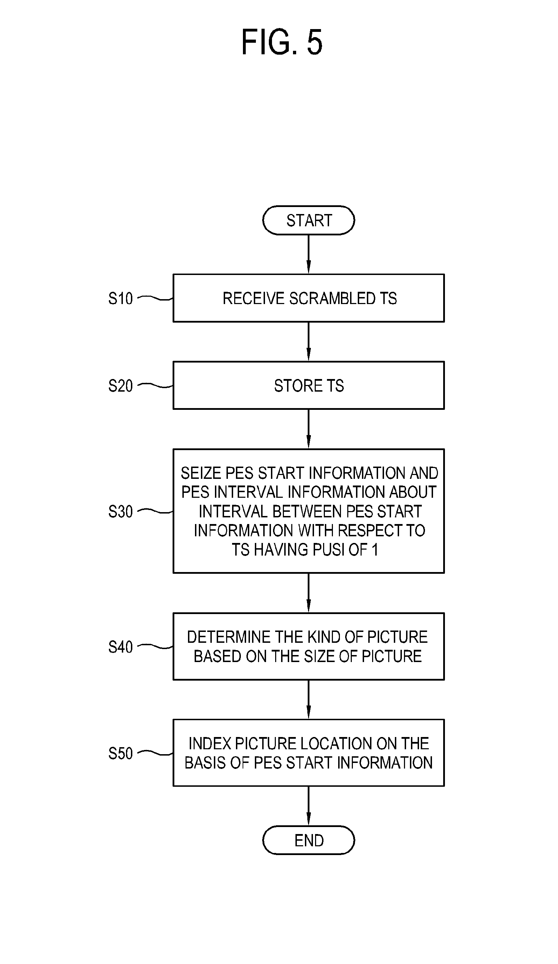

FIG. 5 is a control flowchart for explaining a control method of a picture processing apparatus according to an exemplary embodiment. Referring to FIG. 5, a picture indexing method according to this exemplary embodiment is as follows.

First, the scrambled transport stream with different kinds of pictures is received through the receiver 10 (S10), and the received transport stream is stored in the storage unit 30 (S20).

The demultiplexer 20 seizes the PUSI contained in the header of the transport stream, and seizes the PES start information with respect to the transport stream having the PUSI of 1 and the PES interval information about an interval between the successive PES start information (S30).

The controller 40 determines the kind of picture on the basis of a picture size seized from the PES interval information (S40). The PES interval information corresponds to the number of transport streams received between the successive PES start information, and it is determined that the size of picture is big as the number of transport streams received between the successive PES start information becomes larger. Here, the sizes of I, P and B pictures are clearly distinguished from one another, so that the controller 40 can seize the kind of picture on the basis of various algorithms.

Then, the controller 40 indexes the location where the picture is stored, on the basis of the PES start information (S50). That is, the picture processing apparatus in this exemplary embodiment can index what picture is stored in which location, on the basis of information seized by the demultiplexer 20 without the signal process of the descrambler or the decoder. Thus, it is possible to achieve the screen searching function even though the scrambled transport stream is stored.

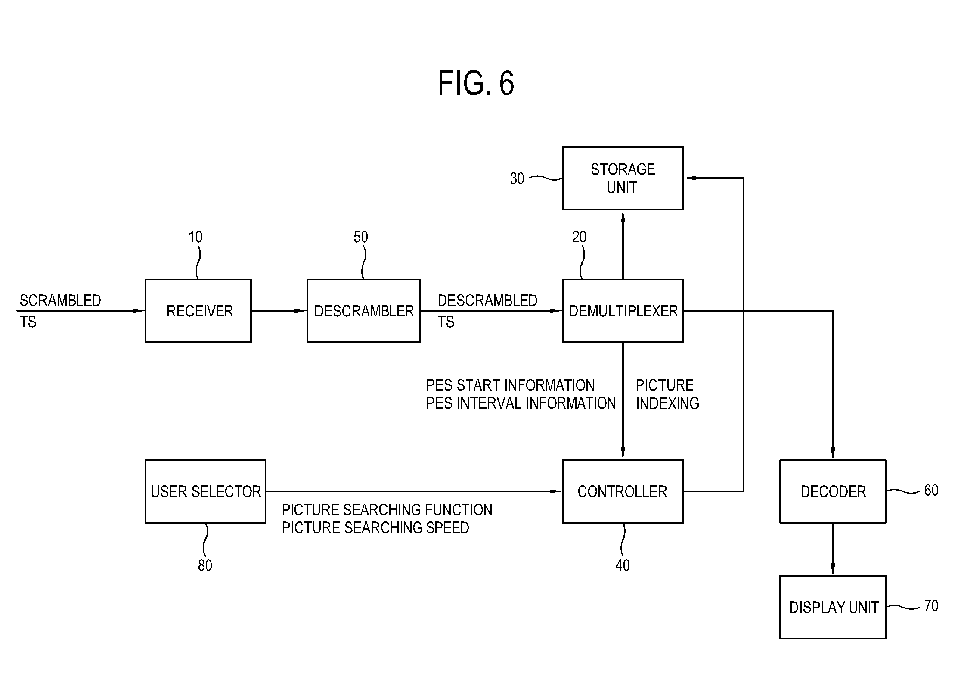

FIG. 6 is a control block diagram of a picture processing apparatus according to another exemplary embodiment. In this exemplary embodiment, a picture processing apparatus includes a descrambler 50, a decoder 60, a display unit 70 and a user selector 80.

The descrambler 50 descrambles a scrambled transport stream allowed for only a specific viewer. The descrambler 50 may include a decoding algorithm. Also, the descrambler 50 may be achieved by a smart card having user information for allowing a user to view the scrambled transport stream.

Using the PID and the PUSI, the demultiplexer 20 separates and extracts a video packetized elementary stream (PES)/elementary stream (ES) and an audio PES/ES, and transmits it to the decoder 60.

The decoder 60 decodes the video PES/ES and the audio PES/ES extracted by the descrambler 50 on the basis of time information for synchronizing video information with audio information, thereby generating video information and audio information. The decoder 60 may include a video decoder (not shown) for decoding the video PES/ES, and an audio decoder (not shown) for decoding the audio PES/ES.

The display unit 70 displays a picture based on a video signal passed through the decoder 60 and processed by a video signal processor (not shown). The display unit 70 may include a liquid crystal display (LCD) panel having a liquid crystal layer, an organic light emitting display (OLED) panel having an organic light emitting layer, a plasma display panel (PDP), etc. Further, the display unit 70 may include a panel driver for driving the corresponding panel. In the case that the display unit 70 includes the LCD panel, a display apparatus may further include a backlight unit for illuminating the LCD panel with light.

The user selector 80 corresponds to a user interface for generating a control signal by a user. The user selector 80 may be achieved by a button provided in a housing of the picture processing apparatus; a mouse, a keyboard, a touch pad, a touch panel or the like being connectable to an audio/video (AV) system; a remote controller having a plurality of buttons; etc. The user selector 80 allows a user to select the picture searching function for searching a picture while forwardly or reversely reproducing the transport stream stored in the storage 30. Also, the user selector 80 may output a selection signal for selecting the searching speed of the picture searching function to the controller 40.

The scrambled transport stream received through the receiver 10 is descrambled through the descrambler 50, and the descrambled transport stream is stored in the storage unit 30.

Irrespective of descrambling the transport stream, the demultiplexer 20 seizes the PES start information and the PES interval information from the header of the transport stream, and outputs it to the controller 40.

Similarly to the foregoing exemplary embodiment, the controller 40 seizes the kind of picture on the basis of the PES interval information, and indexes the location where the picture is stored on the basis of the PES start information.

When receiving the selection signal for selecting the picture searching function, the controller 40 controls the decoder 60 to decode the transport streams constituting the picture corresponding to at least one among the indexed pictures. Since the descrambled transport streams have already been stored in the storage unit 30, an additional descrambling process is not required while searching a picture. A broadcasting signal stored in the form of the transport stream is input again to the demultiplexer 20, and separated and extracted into video PES/ES and audio PES/ES. The decoder 60 decodes the extracted video and audio PES/ES.

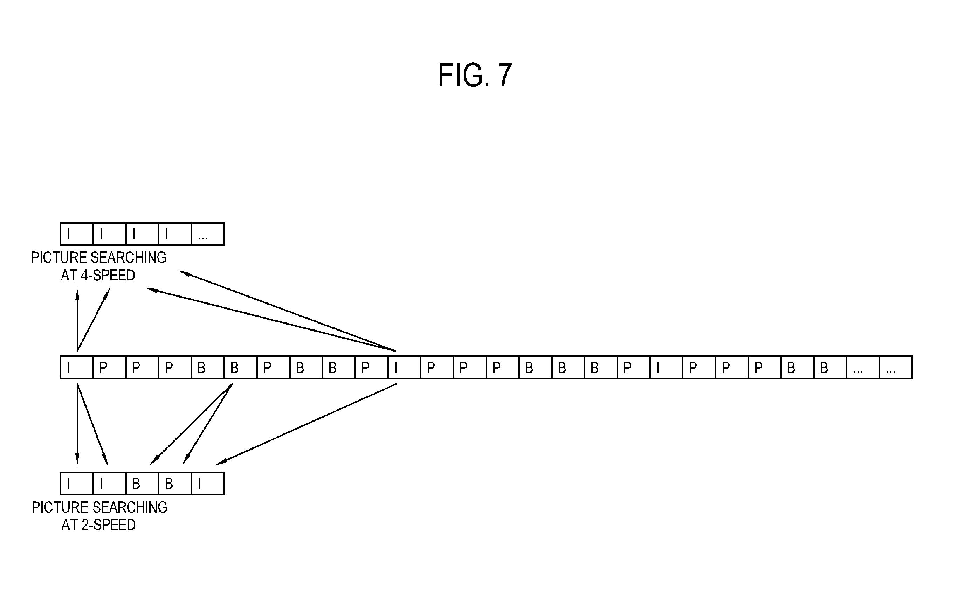

Also, a user may set up the picture searching speed, and the controller 40 may select the kind of pictures to be decoded corresponding to the picture searching speed. FIG. 7 is a view for explaining a picture used in picture speed searching of a picture processing apparatus according to another exemplary embodiment. In general, the GOP that the I picture belongs to includes 8 - 10 or 12 - 18 pictures. If the picture searching speed selected by a user is equal to or faster than 8-speed or 12-speed, the controller 40 refers to the index and controls the I picture to be decoded. If the picture searching speed is 4-speed, the controller 40 in this exemplary embodiment controls the transport streams indexed as the I picture to be decoded, and 2 ∼ 4 times repetitively displays the decoded I picture. If the picture searching speed is faster than 8-speed or 12-speed, not all I pictures but only some I pictures are decoded and displayed.

In the meantime, if the picture searching speed selected by a user is equal to or slower than 4-speed, an interval between the pictures to be displayed becomes narrower. In this case, because the time difference between the pictures to be searched is decreased, more pictures have to be decoded. The controller 40 controls at least one of the B and P pictures to be additionally decoded together with the I picture. For example, FIG. 7 shows that the B picture is additionally decoded in addition to the I picture when the picture is searched at 2-speed.

When the picture searching function is performed, the kind of pictures to be decoded may be adjusted differently in accordance with the number of pictures constituting the GOP, and also the kind of pictures to be repetitively displayed may be variously set up.

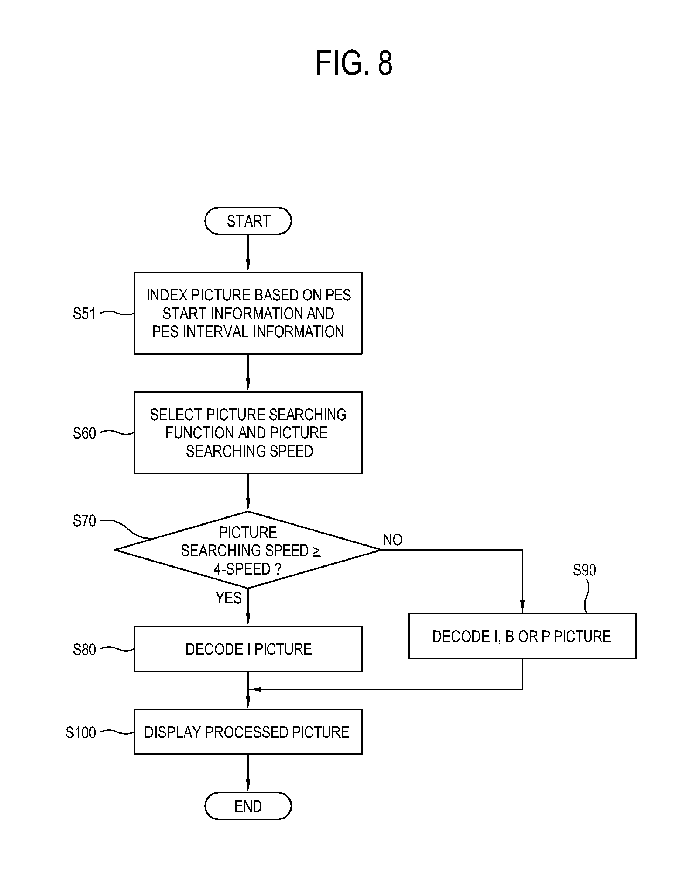

FIG. 8 is a control flowchart for explaining a control method of a picture processing apparatus according to another exemplary embodiment. Referring to FIG. 8, the picture searching function is as follows.

Like the method shown in FIG. 3, the controller 40 performs picture indexing based on the PES start information and the PES interval information (S51).

Then, if a user inputs a selection signal for the picture searching function and the picture searching speed (S60), the controller 40 determines whether the picture searching speed is faster than 4-speed in order to determine the pictures to be decoded (S70).

If the picture searching speed is equal to or faster than 4-speed, the controller 40 controls the demultiplexer 20 and the decoder 60 to decode the I picture (S80), and controls the processed picture to be displayed on the display unit 70 (S100).

If the picture searching speed selected by a user is slower than 4-speed, the controller 40 controls the demultiplexer 20 and the decoder 60 to decode the B or P picture in addition to the I picture (S90), and controls the processed picture to be displayed on the display unit 70 (S100).

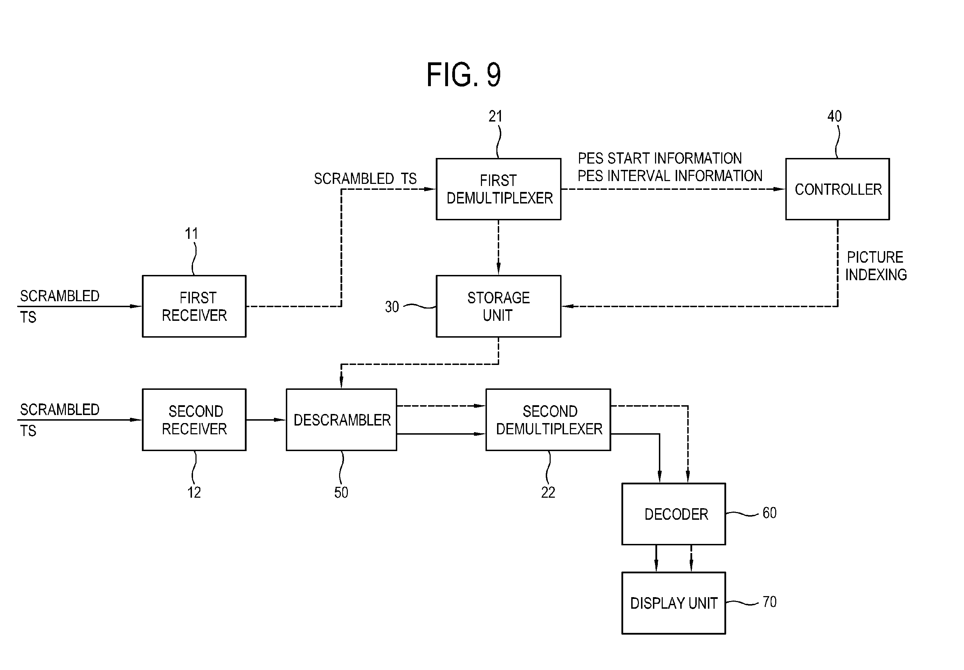

FIG. 9 is a control block diagram of a picture processing apparatus according to another exemplary embodiment. In this exemplary embodiment, a picture processing apparatus includes a plurality of receivers 11 and 12, a plurality of demultiplexers 21 and 22, and a descrambler 50. For example, two receivers 11 and 12, and two demultiplexers 21 and 22 will be described in this exemplary embodiment.

When scrambled broadcasting signals are received through the two receivers 11 and 12, one scrambled broadcasting signal may be viewed by a user and the other one may be stored in the storage unit 30 and reproduced later. For example if the scrambled transport stream received through the second receiver 12 is processed by the descrambler 50, the second demultiplexer 22 and the decoder 60 and then displayed on the display unit 70, the scrambled transport stream received through the first receiver 11 cannot be descrambled.

The scrambled transport stream received through the first receiver 11 is stored intact in the storage unit 30, and at the same time a first demultiplexer 21 seizes header information. The controller 40 seizes the kind of picture on the basis of the PES interval information seized by the first demultiplexer 21, and indexes a location where the picture is stored on the basis of the PES start information.

Then, if a user selects the stored transport stream to be reproduced or selects the picture to be searched, the transport stream is input to, and descrambled by, the descrambler 50, and displayed on the display unit 70 through a general signal process.

Although the transport streams are received by a plurality of receivers, if the picture processing apparatus includes one descrambler 50, the picture indexing is performed when storing the scrambled transport stream so that the picture searching function can be easily implemented in the future.

In this exemplary embodiment, there is one decoder, but the exemplary embodiment is not limited thereto. Alternatively, the decoder 60 and the demultiplexers 21 and 22 may be configured as one chipset, and the picture processing apparatus may include an additional decoder connected to the first demultiplexer 21.

As described above, there are provided a picture processing apparatus and a control method of the same, in which picture indexing of a scrambled transport stream is possible.

Also, there are provided a picture processing apparatus and a control method of the same, which can perform a picture searching function even through a transport stream is scrambled.

The exemplary embodiments can also be embodied as computer-readable codes on a computer-readable recording medium. The computer-readable recording medium is any data storage device that can store data, which can be thereafter be read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion.

Although a few preferred embodiments have been shown and described, it will be appreciated by those skilled in the art that various changes and modifications might be made without departing from the scope of the invention, as defined in the appended claims.

## Claims

1. A picture processing apparatus comprising
a receiver which receives scrambled transport streams constituting different kinds of pictures;
a storage unit;
a demultiplexer which seizes payload unit start identification (PUSI) contained in a header of each transport stream, and outputs packetized elementary stream (PES) start information indicating information about a transport stream having a PUSI equal to 1 and PES interval information about an interval between a first transport stream having a PUSI equal to 1 and a second transport stream having a PUSI equal to 1, wherein the second transport stream is the next transport stream having a PUSI equal to 1 following the first transport stream; and
a controller which stores the received transport streams in the storage unit, determines the kind of pictures on the basis of a picture size determined from the PES interval information, and indexes a location where the pictures are stored on the basis of the PES start information.

2. The picture processing apparatus according to claim 1, wherein the PES interval information corresponds to the number of transport streams received between the first transport stream and the second transport stream, and
the controller determines that the picture size increases as the number of transport streams received between the first transport stream and the second transport stream becomes larger.

3. The picture processing apparatus according to claim 1, wherein the controller indexes an absolute location where the pictures are stored or indexes a location of where the pictures are stored based on a relative location between stored pictures.

4. The picture processing apparatus according to claim 1, further comprising
a user selector through which a picture searching function for searching a picture is selected;
a descrambler which descrambles the scrambled transport streams; and
a decoder which decodes the descrambled transport streams,
wherein the controller controls the descrambler and the decoder to descramble and decode transport streams constituting a picture corresponding to at least one of the indexed pictures if the picture searching function is selected.

5. The picture processing apparatus according to claim 4, wherein the user selector receives a selecting signal for setting up a picture searching speed, and
the controller selects the kind of pictures to be decoded corresponding to the picture searching speed.

6. The picture processing apparatus according to claim 5, wherein the controller decodes an intra coded (I) picture if the picture searching speed is equal to or faster than 4-speed, and decodes the I picture and at least one of a bidirectional (B) picture and a predictive (P) picture if the picture searching speed is slower than 4-speed.

7. The picture processing apparatus according to claim 6, further comprising a display unit which displays a picture based on the decoded transport stream.

8. A method of controlling a picture processing apparatus, the method comprising:
receiving scrambled transport streams constituting different kinds of pictures;
storing the transport streams;
seizing payload unit start identification (PUSI) contained in a header of each transport stream, and seizing packetized elementary stream (PES) start information indicating information about a transport stream having a PUSI equal to 1 and PES interval information about an interval between a first transport stream having a PUSI equal to 1 and a second transport stream having a PUSI equal to 1, wherein the second transport stream is the next transport stream having a PUSI equal to 1 following the first transport stream;
determining the kind of pictures on the basis of a picture size determined from the PES interval information; and
indexing a location where the pictures are stored on the basis of the PES start information.

9. The method according to claim 8, wherein the PES interval information corresponds to the number of transport streams received between the first transport stream and the second transport stream,
the method further comprising determining that the picture size increases as the number of transport streams received between the first transport stream and the second transport stream becomes larger.

10. The method according to claim 8, wherein the indexing comprises indexing an absolute location where the pictures are stored or indexing a location of where the pictures are stored based on a relative location between stored pictures.

11. The method according to claim 9, further comprising;
descrambling the scrambled transport stream;
receiving a selection signal to select a picture searching function for searching a picture; and
decoding transport streams constituting a picture corresponding to at least one of the indexed pictures.

12. The method according to claim 11, further comprising;
receiving a selecting signal for setting up a picture searching speed; and
selecting the kind of pictures to be decoded corresponding to the picture searching speed.

13. The method according to claim 12, wherein an intra coded (I) picture is decoded if the picture searching speed is equal to or faster than 8-speed, and the I picture and at least one of a bidirectional (B) picture and a predictive (P) picture are decoded if the picture searching speed is slower than 4-speed.

14. The method according to claim 13, further comprising displaying a picture based on the decoded transport stream.
